**Europäisches Patentamt**

**European Patent Office**

**Office européen des brevets**

(19)

(11) Publication number: **0 078 174**
A2

(12)

# EUROPEAN PATENT APPLICATION

(21) Application number: **82305663.5**

(22) Date of filing: **25.10.82**

(51) Int. Cl.³: **B 32 B 15/08**
**B 32 B 31/12**

(30) Priority: **28.10.81 JP 173365/81**

(43) Date of publication of application:
**04.05.83 Bulletin 83/18**

(84) Designated Contracting States:
**BE DE FR GB IT NL**

(71) Applicant: **SUMITOMO CHEMICAL COMPANY, LIMITED**
**15 Kitahama 5-chome Higashi-ku**
**Osaka-shi Osaka-fu(JP)**

(71) Applicant: **SUMITOMO METAL INDUSTRIES, LTD.**
**15, Kitahama 5-chome Higashi-ku**
**Osaka-shi, Osaka, 541(JP)**

(72) Inventor: **Fukushima, Nobuo**
**4396-14, Sakamotohonmachi**
**Otsu-shi(JP)**

(72) Inventor: **Kitagawa, Yoshihiko**
**8-6, Kitasakurazuka-2-chome**
**Toyonaka-shi(JP)**

(72) Inventor: **Sonobe, Takanobu**
**9-35, Miyanocho**
**Takatsuki-shi(JP)**

(72) Inventor: **Toya, Hiroo**
**26, Tamagwawa-1-chome**
**Takatsuki-shi(JP)**

(72) Inventor: **Kondo, Masatsune**
**6-30, Maedocho**
**Niihama-shi(JP)**

(72) Inventor: **Shiota, Toshiaki**
**1933-22, Miyanokawara-1-chome**
**Takatsuki-shi(JP)**

(72) Inventor: **Nishihara, Minoru**
**24, Hiraicho Kitashirakawa**
**Sakyo-ku Kyoto(JP)**

(72) Inventor: **Nagai, Hiroyuki**
**4-13-104, Minamikoshien-1-chome**
**Nishinomiya-shi(JP)**

(74) Representative: **Goldin, Douglas Michael et al,**
**J.A. KEMP & CO. 14, South Square Gray's Inn**
**London WC1R 5EU(GB)**

(54) Process for producing metal/thermoplastic resin/metal sandwich laminate.

(57) A process for producing a metal/thermoplastic resin/ metal sandwich laminate of improved bonding strength and secondary-processability, wherein each metal layer is 0.1-1.0 mm thick, and the inner layer is a multilayered composite sheet comprising a thermoplastic resin core of which both sides are previously coated with another thermoplastic resin capable of adhering strongly to the metal.

EP 0 078 174 A2

Croydon Printing Company Ltd.

## PROCESS FOR PRODUCING METAL/THERMOPLASTIC RESIN/
## METAL SANDWICH LAMINATE

This invention relates to a process for laminating thermoplastic resin and metal sheets together. More particularly, it relates to a process for producing a metal/thermoplastic resin/metal sandwich laminate superior in metal-resin bonding strength, corrosion resistance of its edge portion, secondary processability in the form of laminate, and economy.

Metal/thermoplastic resin/metal laminates, as compared with plates of the same metal having the same thickness as the total thickness of the laminates, are equivalent in flexural stiffness and other mechanical properties and better in their characteristics of lightweight. These properties of the laminates are highly evaluated in industrial fields such as automobile, other vehicle, and building fields. These laminates are therefore hopeful materials for industrial applications. For laminating a steel sheet, tin plate, aluminum sheet, or the like upon both sides of a thermoplastic resin sheet, there are conventionally practiced methods of treatments of the thermoplastic resin and the metal, such as electric discharge treatment, chromic acid treatment, and various types of etching and methods of employing a modified thermoplastic resin, as the inner layer resin, exhibiting a good adhesion to the metal.

However, the surface treatments have drawbacks in that the treatment process is time- and money-consuming and additionally results in only insufficient adhesion between the thermoplastic resin and the metal and that the laminate produced is unsatisfactory in corrosion resistance, particularly at the edge portion.

The methods of employing modified thermoplastic resins have also drawbacks such as high costs and deteriorations of mechanical strength and of heat resistance because a modified thermoplastic resin, which needs, properly speaking, to be laid only between the thermoplastic resin and each metal sheet, is used for the whole inner layer of thermoplastic resin.

Another method of sandwiching a thermoplastic resin between metal sheets has been disclosed in Japanese Patent Application Kokai (Laid-open) No. 8884/1978, wherein an adhesive resin film is interposed between the thermoplastic resin and each metal sheel to bond them together.

This method is however liable to cause wrinkling of the adhesive resin film and the air entraped along with the wrinkles results in depressions and blisters on the laminate surface.

In order to improve the drawbacks as mentioned above, the present inventors have conducted extensive studies, and as the result, the present invention has been accomplished.

SUMMARY OF THE INVENTION

The primary object of this invention is to provide a process for producing metal/thermoplastic resin/metal laminates which is free from the foregoing drawbacks.

Other objects and advantages of this invention will be apparent from the following description.

According to this invention, there is provided a process for producing metal/thermoplastic resin/metal sandwich laminates improved in metal-resin bonding strength and in corrosion resistance of the edge portion and having a superior appearance with no wrinkle or blister and a good workability in secondary processing, which comprises bonding together metal sheets and a multilayered composite sheet comprising a thermoplastic resin core of which both surfaces are previously coated with another thermoplastic resin capable of adhering strongly to the metal.

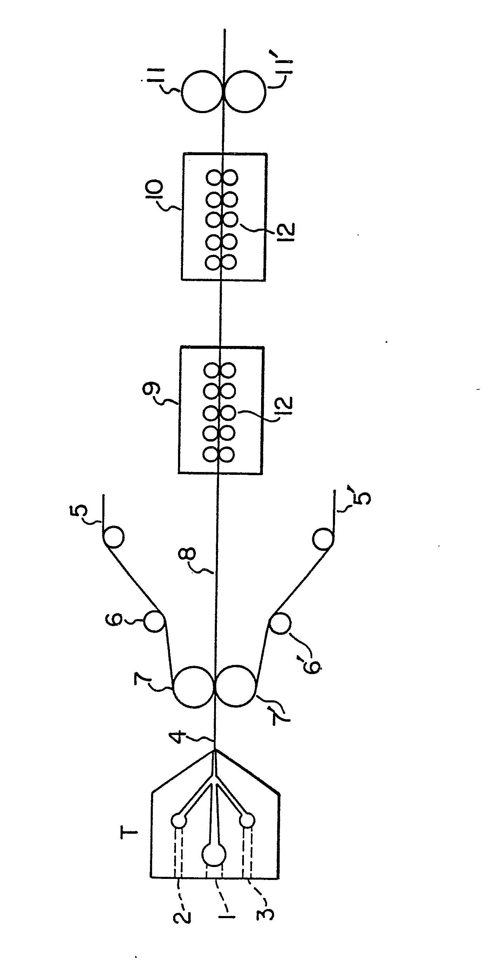

BRIEF DESCRIPTION OF THE DRAWING

The accompanying drawing is a schematic view of an embodiment of the apparatus for carrying out the process of this invention.

In the drawing, the symbols represent the following:

T: Coextrusion die; 4: Three-layered extrudate; 5 and 5': Metal sheets; 7 and 7': Laminating rolls; 8: Laminate; 9: Heating device; 10: Cooling device; 11 and 11': Take-up rolls

DETAILED DESCRIPTION OF THE INVENTION

There is no particular restriction on the metal sheets used in this invention, but the following metal sheets are generally used: aluminum, steel, stainless steel, copper, titanium, zinc, nickel, platinum and lead sheets; alloy sheets containing any of these metals; metal sheets coated with zinc, tin, chromium, or the like, including galvanized steel sheets; and metal sheets of which the surface not to face the thermoplastic resin is coated with a relatively heat-resisting resin such as epoxy resin, melamine resin, polyester resin, or the like. Thickness of the metal sheets used is generally in the range of 0.1 to 1.0 mm.

Steel sheets among these metal sheets are used usually after their surfaces to face the thermoplastic resin have been subjected to a surface treatment. While any possible surface treatment can be applied for this purpose, preferred treatments are chemical treatments, plating, and vacuum deposition. In particular, chromate treatment, Ni-Zn alloy plating, and Fe-Zn alloy plating are favorable for the purpose of improving the corrosion resistance of steel sheets.

Thermoplastic resins usable for the inner layer of the laminate include polyolefins such as polyethylene, polypropylene, and polybutene; olefin copolymers such as ethylene-propylene random copolymer, ethylene-propylene block copolymer, ethylene-butene copolymer, and ethylene-propylene-butene terpolymer; other polymers usually available for extrusion molding, such as poly(vinyl chloride), polystyrene, polyamide, polycarbonate, thermoplastic polyester, and ABS resin; and mixtures of these polymers loaded with or without any of various kinds of fillers and small amounts of elastomers.

The various kinds of fillers include fibrous reinforcements such as glass fiber, asbestos, carbon fiber, and aluminium oxide fiber; inorganic fillers such as talc, mica, calcium carbonate, and aluminum hydroxide; and cellulosic fillers such as paper and wood flour. These fillers are used according to individual characteristics thereof.

It is also possible to construct the inner layer partly or entirely with a thermoplastic resin foam.

The thermoplastic resin capable of adhering strongly to the metal sheets is not particularly limited so far as it is properly selected in connection with the foregoing thermoplastic resins used for the inner layer.

For bonding the metal sheets onto the inner layer resin such as polyolefin, a mixture of polyolefins, or a composition comprising a polyolefin as a major component, for example the following resins are preferable: adhesive resins of ethylene copolymer series and modified resins based on polyethylene, polypropylene, polybutene, ethylene-propylene random copolymer, ethylene-propylene block copolymer, ethylene-butene copolymer, ethylene-propylene-butene terpolymer, and mixtures of these polymers.

More specifically, as examples of the thermoplastic resin used in this invention capable of adhering strongly to the metal sheets, there may be illustrated thermoplastic adhesive resins prepared by modifing polyolefin resins by using at least one of unsaturated carboxylic acids and anhydrides thereof such as maleic acids, fumaric acid, itaconic acid, citraconic acid, crotonic acid, isocrotonic acid, mesaconic acid, angelic acid, acrylic acid, methacrylic acid, maleic anhydride, itaconic anhydride, and citraconic anhydride, of which particularly preferred are polyolefins modified with maleic anhydride and those modified with acrylic acid.

Typical examples of the modified thermoplastic resins are the adhesive compositions prepared by the process of Japanese Patent Publication No. 48195/1976.

That is, these adhesive compositions are prepared by adding 0.1-10% by weight of one or more of compounds selected from unsaturated carboxylic acids and anhydrides thereof and 0.1-80% by weight of magnesium oxide to crystalline polyolefins and carrying out the reaction at temperatures of not less than melting points of the polyolefins. The compositions thus obtained are known to have an excellent bonding property and also exhibit said excellent bonding property in the production of the laminates of this invention.

The adhesive resins of ethylene copolymer series particularly preferred include ethylene-glycidyl methacrylate copolymer, ethylene-vinyl acetate-glycidyl methacrylate copolymer, and compositions containing at least one of these copolymers as a major component.

While the inner multilayered composite sheet of thermoplastic resins in this invention is built up of outer layers of a thermoplastic adhesive resin and an inner layer of a thermoplastic resin as mentioned above, the combination of these resins is not particularly limited but appropriately selected according to the application purpose of the laminate. Some examples of the combination are as follows:

(i) Outer layers: maleic anhydride-magnesium oxide-modified polypropylene; Inner layer: polypropylene, ethylene-propylene random copolymer, or ethylene-propylene block copolymer.

(ii) Outer layers: ethylene-glycidyl methacrylate copolymer; Inner layer: polypropylene, ethylene-propylene random copolymer, or ethylene-propylene block copolymer.

(iii) Outer layers: maleic anhydride-magnesium oxide-modified high density polyethylene; Inner layer: nylon-6, nylon-6,6 or nylon-12.

(iv) Outer layers: maleic anhydride-magnesium oxide-modified polypropylene; Inner layer: foamed polypropylene, foamed polyethylene, foamed polystyrene, or foamed poly(vinyl chloride).

(v)  Outer layer:  maleic anhydride-magnesium oxide-modified polypropylene; Inner layer:  wood flour-filled polypropylene.

(vi)  Outer layers:  maleic anhydride-magnesium oxide-modified polypropylene; Inner layer:  glass fiber-reinforced polypropylene.

(vii)  Outer layers:  ethylene-vinyl acetate-glycidyl methacrylate copolymer; Inner layer:  polypropylene, ethylene-propylene random copolymer, or ethylene-propylene block copolymer.

Although the thickness of each layer in the inner multilayered composite sheet of these thermoplastic resins is not particularly limited, each outer layer (adhesion layer) is suitably 5-100 μ, preferably 10-50 μ, thick, and the inner layer is suitably 0.1-50 mm thick.

The multilayered composite sheet of thermoplastic resins can be formed by well-known methods such as coextrusion, extrusion coating, solution coating followed by drying, and lamination by means of a press. A proper method is selected according to the production scale, the construction of the composite, and the application field of the laminate.

The metal/thermoplastic resin/metal laminate contructed with the above-mentioned components is functionally equivalent in mechanical strength to the same thickness single-layer plate of the same metal and additionally has good damping, anticorrosive, acoustical, and heat insulating properties as well as the advantage of lightweight. In these respects, the industrial value of the present laminate may be beyond expectation. Moreover, the laminate may permit effective cost reduction depending upon the selection of the inner layer materials and also is extremely beneficial in view of resource preservation, energy saving, and waste material utilization.

Because the inner layer is a multilayered composite comprising a thermoplastic resin core and modified thermoplastic resin skins, the present laminate comprising such an inner layer sandwiched between metal sheets is improved in mechanical strength and heat resistance and hence exhibits a higher dent resistance and less heat deformation on welding, as compared with a similar laminate of which the inner layer is entirely built up of a similar modified thermoplastic resin. When the modified thermoplastic resin on both sides is more flexible and has a higher elongation at break than the inner thermoplastic resin, it is also possible to minimize such deterioration of the metal-resin bonding strength of the laminate that will be caused by the bend working, heating-cooling cyclic treatment, or other stress-giving treatments.

For laminating the metal sheets onto the multilayered composite sheet, known methods are applicable, for instance, those employing pressure rolls and those employing a press.

According to an example of the pressure roll method, the metal sheets and the multilayered composite sheet are heated by known heating means just ahead of contacting the metal sheets with the composite sheet to a temperature slightly above the melting point of the modified thermoplastic resin. The known heating means include heat rolls, infrared radiant heaters, various types of ovens, direct flame, hot air blow, highfrequency induction heaters, etc. These means can be used at will singly or in combination. Then, the metal and resin sheets are combined between a pair of rolls rotating in opposite directions. The rolls can also serve as a heater to preheat the metal sheets by winding them separately about half around the rolls before combining with the resin sheet. The surface temperature of the rolls is desirably kept at a temperature slight above the melting point of the modified thermoplastic resin. The combined sheets, i.e. the laminate is then subjected to an after-heat treatment as required and successively is cooled to set. The laminate thus obtained has a high precision thickness and none of wrinkles, blisters, and depressions.

The drawing shows the outline of an example of the facility for laminating the metal sheets onto the coextruded multilayered composite sheet of thermoplastic resins by the pressure roll method.

Referring now to the drawing, this invention is described.

The thermoplastic resin and the modified thermoplastic resin are supplied to one extruder and another (not illustrated), respectively, and the former resin is passed through the central manifold 1 in a coextrusion die T and the latter resin through manifolds 2 and 3 on both sides of the manifold 1. The three resin flows are then combined in the die T and extruded through the slot of the die T in the form of multilayered composite sheet 4, which is sent to laminating rolls 7 and 7'. On the other hand, the metal sheets 5 and 5' are passed over guide rolls 6 and 6', respectively, and sent to the laminating rolls 7 and 7' to be laminated onto the composite sheet 4 with pressure.

For preventing wrinkling in the lamination, it is desirable to pass the metal sheets through transverse-spreading devices such as expander rolls or to apply tension to the unwinding metal sheets by means of a suitable tension controller. The nip opening of the laminating rolls 7 and 7' is adjusted so that no void may exist between each metal sheet 5 or 5' and the yet molten multilayered composite sheet 4 and no substantial deformation may be given to the composite sheet 4. Regarding the correlation between the extrusion speed and the take-off speed, the latter speed need to be equal to the former speed or more. If the take-off speed is less than the extrusion speed or the nip opening of the laminating rolls 7 and 7' is too small, a bank forms between the multilayered composite extrudate 4 and each metal sheet 5 or 5' on the exit side of the

nip of the laminating rolls 7 and 7', since the metal sheets 5 and 5' are strongly pressed to the yet molten extrudate 4.  At the same time the friction between the metal sheet 5 or 5' and the roll 7 or 7' will increase and the transverse-directional thermal expansions of the metal sheets 5 and 5' are prevented, thereby developing machine-directional wrinkles of the metal sheets 5 and 5'.

Thereafter, the laminate 8 is subjected to a heat treatment at a prescribed temperature in a heating device 9, then is cooled in a cooling device 10, and is taken off by means of take-off rolls 11 and 11'.

The heating device 9 and the cooling device 10 are each provided with a train of pinch rolls 12. The laminate is heated with a set of infrared radiant heaters in the heating device 9 and cooled with air driven thereinto by means of a blower.

This invention will be illustrated in further detail with reference to the following Examples: However, this invention is not to be limited to these Examples.  In the Examples, the bonding strength was evaluated with a 180° peel strength measured in accordance with JIS K6744-1968 by using an Instron tensile tester at a drawing rate of 50 mm/min.

Example 1

A modified polypropylene resin of m.p. 156°C and melt index (M.I.) 7.0 g/10 min which had been prepared by grafting maleic anhydride to an isotactic polypropylene was loaded into a 50-mm screw extruder No. 1. An isotactic polypropylene of density 0.91 g/cm$^3$ and M.I. 1.5 g/10 min. was loaded into a 65-mm screw extruder No. 2. Both the resin melts were coextruded through a three-manifold, one-slot T die of slot width 1200 mm kept at a temperature of 230°C, to form a three-layered composite sheet build up of the isotactic polypropylene core and the modified polypropylene skins. Steel sheets, of which the surfaces to face the resin had been subjected to an electrolytic chromate treatment, were separately laminated onto both sides of the three-layered composite sheet by means of a pair of 400-mm diameter rolls. The resulting laminate was then heat-treated at 200°C and cooled to room temperature. The laminate thus prepared had a structure of steel 0.2 mm/ modified polypropylene 0.025 mm/isotactic polypropylene 0.55 mm/modified polypropylene 0.025 mm/steel 0.2 mm and a total thickness of 1.0 mm. The initial bonding strength between the steel sheet and the modified polypropylene in the laminate was 12.0 kg/cm. After 500-hour aging of the laminate in a 100°C oven, the bonding strength between said layers was 11.8 kg/cm, indicating practically no reduction.

Example 2

Maleic anhydride-modified polypropylene films 25 μ thick in two rolls were unwound and laminated separately onto both sides of a polypropylene sheet extruded from an extruder through a coat-hanger type of T die at a screw speed of 80 r.p.m. and a resin temperature of 260°C to form a three-layered composite sheet.

Onto each side of the resulting three-layered composite sheet, there was laminated a steel sheet preheated to 190°C which had a Fe-Zn alloy plating layer on its surface to face the resin by means of a pair of 400-mm diameter rolls. Then, a laminate having the same construction as the one of Example 1 was obtained through a heat-treatment at 200°C and cooling to room temperature.

The metal-resin bonding strength of this laminate was initially 11.8 kg/cm and after 500-hour aging in a 100°C oven, was 11.6 kg/cm, indicating no fault.

Example 3

Both sides of a polypropylene sheet were coated with a primer prepared by dissolving 3% by weight of an isocyanate-base adhesive (Trade name: Corronate L; mfd. by Nippon Polyurethane Co.; produced by addition reaction of 3 moles of tolylene diisocyanate to 1 mole of trimethylolpropane) in a 50:50 by weight mixture of toluene and triisocyanate. After the solvents had been driven off from the coated sheet, a maleic anhydride-modified polypropylene film was laminated onto each side of the resulting sheet to prepare a three-layered composite sheet. Then, a laminate of the same construction was obtained in the same manner as in Example 2. The metal-resin bonding strength of this laminate was initially 11.7 kg/cm and after 500-hour aging in a 100°C oven, was 11.5 kg/cm, indicating no fault.


Comparative Example 1

A maleic anhydride-modified polypropylene sheet was extruded from a coat-hanger type of T die at a screw speed of 87 r.p.m. and a resin temperature of 230°C. A steel sheet was laminated onto each side of the extruded sheet by means of a pair of 400-mm diameter rolls. Then the resulting laminate was subjected to heat-treatment at 200°C, and cooling to room temperature to obtain a laminate having a construction of steel 0.2 mm/modified polypropylene 0.6 mm/steel 0.2 mm and a total thickness of 1.0 mm.

The metal-resin bonding strength of this laminate was initially 12.0 kg/cm, which was dropped to 6 kg/cm after 500-hour aging in a 100°C oven.


Example 4 and Comparative Example 2

Each side of an isotactic polypropylene sheet (300 μ thickness) was overlaid with an ethylene-vinyl acetate-glycidyl methacrylate terpolymer (vinyl acetate 6 wt%, glycidyl methacrylate 12 wt%) having a M.I. of 2.0 g/10 min and 30 μ thickness, to prepare a three-layered composite sheet of 360 μ in total thickness.

A steel sheet (0.22 mm thickness), of which the surface to face the resin had been subjected to a chromate treatment, was laminated onto each side of the three-layered composite sheet at 170°C by means of a hot press to prepare a laminate of sandwich structure (Sample A). In Comparative Example 2, a 360-µ thickness single-layered sheet of the same ethylene-vinyl acetate-glycidyl methacrylate terpolymer as the above was prepared. The same steel sheet as the above was laminated onto each side of said single-layered sheet at 170°C by means of a hot press to prepare a laminate of sandwich structure (Sample B). U-form bending tests were conducted on Samples A and B to evaluate their bending workability and spring back extent. As a result, no crack appeared in Sample A or B bent until the diameter of curvature became 2 mm; however, the spring back (return angle) for Sample B was as large as 30°, in contrast with 12° for Sample A; thus Sample A was superior.

Example 5 and Comparative Example 3

Each side of an isotactic polypropylene sheet 300 µ thickness was overlaid with a modified polypropylene a melting point of 156°C, M.I. of 7.0 g/ 10 min. and 30 µ thickness prepared by grafting maleic anhydride to an isotactic polypropylene to prepare a three-layered composite sheet of 360 µ in total thickness. A steel sheet 0.22 mm thickness of which the surface to face the resin had been subjected to a chromate treatment was laminated onto each side of the three-layered composite sheet at 170°C by means of a hot press to prepare a laminate of sandwich structure (Sample C). In Comparative Example 3, the same steel sheet as the above was laminated onto each side of a 360 μ thickness single-layered sheet of the same modified polypropylene as the above to prepare a laminate of sandwich structure (Sample D).

In the same manner as in Example 4, Samples C and D were tested to evaluate their bending workability and spring back extent. As a result, while Sample C developed no crack by bending until the diameter of curvature became 3 mm, Sample D developed necking at a diameter of curvature of 4 mm and a crack at 3 mm. The spring back was as good as 9° for both Samples.

- 18 -

## CLAIMS

1.      A process for producing metal/thermoplastic resin/metal sandwich laminates of improved bonding strength and secondary-processability, wherein each metal layer is 0.1-1.0 mm thick, which comprises bonding together metal sheets and a multilayered composite sheet comprising a thermoplastic resin core of which both sides are previously coated with another thermoplastic resin capable of adhering strongly to the metal.

2.      A process according to claim 1, wherein the bonding of the metal sheets to the multilayered composite sheet of thermoplastic resins is carried out by fusing the surface of the composite sheet.

3.      A process according to claim 1 or 2, wherein the thermoplastic resin capable of adhering strongly to the metal is a modified polyolefin composition prepared by reacting a mixture of a crystalline polyolefin, unsaturated carboxylic acid, and magnesium oxide at a temperature of the melting point of the polyolefin or above.

4.      A process according to claim 1 or 2 wherein the thermoplastic resin capable of adhering strongly to the metal is an ethylene-glycidyl methacrylate copolymer and/or an ethylene-vinyl acetate-glycidyl methacrylate terpolymer.

5.      A process according to any one of the preceding claims, wherein a steel sheet having an electrolytic chromate treatment coat at least on its surface facing the resin layer is employed as the metal sheet to improve the corrosion resistance of the laminate.

6.      A process according to any one of claims 1-4, wherein a steel sheet having a Fe-Zn alloy plating layer or Ni-Zn alloy plating layer at least on its surface facing the resin layer is employed as the metal sheet to improve the corrosion resistance of the laminate.